# EUROPEAN PATENT APPLICATION

(11) **EP 1 700 537 A1**
(43) Date of publication of application: **13.09.2006**
(21) Application number: 06075587.3
(22) Date of filing: 08.07.2002
(51) Int. Cl.: A46B 9/06, A61C 17/32

(54) **Electric toothbrush**

(30) Priority: 14.08.2001 EP 01306930
(62) Divisional of application: 02740768.3
(71) Applicant: UNILEVER N.V., 3013 AL Rotterdam (NL); UNILEVER PLC, London EC4P 4BQ (GB)
(72) Inventor: Davies, Richard Huw c/o Lever Fabergé Italia S.r.l, 26841 Casalpusterlengo (IT); Neri, Luca c/o Lever Fabergé Italia S.r.l., 26841 Casalpusterlengo (IT)
(74) Representative: Newbould, Frazer Anthony

(57) **Abstract**

An electric toothbrush comprising a handle and an oscillating brush head which oscillates about an oscillating axis, said head comprising a rubbery cleaning element,
characterised in that the rubbery cleaning element is in the form of a radially-extending resilient wall.

## Description

The present invention relates to an electric toothbrush according to the preamble of claim 1.

Toothbrushes comprising rubbery cleaning elements are known in the art. A typical example is WO 98/22000 (Asher) which discloses a toothbrush head comprising in addition to conventional bristles rubbery cleaning elements which have had abrasive particles embedded therein. Another document according to the prior art is WO 01/21036 (Unilever) which discloses a toothbrush head comprising a rubbery cleaning element in the form of a resilient wall, which runs along the brush head in a sinusoidal fashion.

Electric toothbrushes are also known in the art and generally provide an oscillating brushing head upon which are mounted bristles for cleaning the teeth.

The prior art also includes our co-pending application WO 01/01817, which discloses a toothbrush head for an electric toothbrush and which comprises a rubbery cleaning element for providing a massaging effect to the gums and a polishing effect to the teeth.

The rubbery cleaning element in this prior art is in the form of a rubbery finger, which stands independently of any other features on the brush head.

Despite the prior art there remains the need for improved brush heads for oscillating electric toothbrushes.

Accordingly, the present invention provides a toothbrush according to claim 1.

The resilient wall extends radially along the oscillating brush head in that it extends from a central area of the oscillating brush head to an outer area of the brush head generally in a radial direction. Often this wall will extend in a direction from around about the oscillating axis towards the edge of the brush head. The wall may also extend in a linear fashion or in some instances it may actually extend for a distance equal to or greater than the radius of the brush head because it extends in a non-linear fashion, e.g. it extends in an arcuate or sinusoidal fashion. Preferably, the wall extends for a distance equal to from 0.3 to 1.5 and more preferably from 0.5 to 1.0 times the radius of the brush head.

The oscillating brush head according to the invention is preferably circular in shape such that its presentation does not change markedly when oscillated at high speed.

By radially extending is meant that the wall extends within an imaginary slice of the brush head which equates to any quarter of the total circle of the head and remains within said slice as it extends towards the outer perimeter of the head. Preferably, the slice is a fifth of the total circle of the brush head. More preferably the slice is a sixth, especially a seventh and most preferably an eighth of the total circle of the brush head.

The radial arrangement of the rubbery cleaning element is particularly beneficial since it maximises the polishing efficacy during brushing due to the oscillation of the brush head. As the brush head oscillates the brush head moves in a direction substantially perpendicular to the radially extending cleaning element which accordingly imparts its greatest resistance along the tooth surface. This has been found to provide a much improved polishing benefit.

Preferably, the wall commences at its most interior side, from less than 50% the radius of the circle of the brush head from the central oscillating axis towards the perimeter. More preferably, from 40%, especially preferably from 25% and most preferably from 15% the radius of the brush head.

Preferably, the wall terminates at its most exterior side, from less than 50% the radius of the circle of the brush head from the perimeter of the circle. More preferably, from 40%, especially preferably from 25% and most preferably from 15% the radius of the brush head.

The wall is preferably made of a thermoplastic elastomeric material such as those often used in toothbrush manufacture. The thermoplastic elastomer which forms the wall may be a thermoplastic vulcanate (TPV) consisting of a mixture of polypropylene and EPDM (ethylene propylene diene monomers) which is available as Santoprene (brand), described in US patent 5,393,796 issued to Halberstadt et al, or Vyram (brand), another TPV consisting of a mixture of polypropylene and natural rubber, both Santoprene and Vyram (brands) being elastomers marketed by Advanced Elastomer Systems. Other suitable elastomers include Kraton, a brand of styrene block copolymer (SBC) marketed by Shell, and Dynaflex G 2706 (brand), a thermoplastic elastomer marketed by GLS Corporation and which is made with Kraton (brand) polymer. Other thermoplastic compounds include base:styrene block co-polymer (SEBS) e.g. Thermolast K from Gummiwerk Kraiberg (GmbH) or PONA-flex S from PLASTOLEN (GmbH). These and other suitable elastomers have, typically, a Shore A hardness of from 13 to 94. Thermoplastic elastomers have the benefit of providing the best degree of resilience while still imparting a polishing action on the teeth. This is particularly noticeable where the brush oscillates quickly where too resilient a material would flex too much and remain stationery while the base of the brush oscillated. A Shore A hardness of from 20 to 50 being the preferred harness.

In a preferred embodiment the wall is tapered from a base end to a tip end. Preferably such tapering results in a tip which is 85% the width, preferably 75% and especially 65% the width of the base in cross section. Tapering allows for improved polishing since it allows the power of the stroke during oscillation to be concentrated into the tip of the rubber cleaning element without dissipating too much energy unnecessarily.

In another preferred embodiment the tip of the wall is crenellated to provide improved polishing efficacy to the wall. The wall may also comprise abrasive material to achieve a similar benefit. Typical abrasives include perlite, silica, chalk, alumina and others known to the skilled man in the art. An alternative is that the wall comprises a raised ridge along a length of its tip to improve the cleaning efficacy and feel in the mouth.

The wall may also be in the form of a series of fingers which although are capable of independent movement relative to one another are so spaced such that they present a wall of said fingers. The wall may also be in the form of small wall-like members which each run for a short distance of the entire wall.

The wall is typically made by injection moulding and should there be more than one wall on the brush head they may each be linked to any other so that they can be manufactured in a single injection moulding step. Should the wall be in the form of fingers or an array of shorter wall-like members they may also be connected to one another somewhere along their length, preferably at their base to improve the manufacturing process. The wall may also be fixed to the brush head by way of this injection moulding step in that the moulding step heats the wall material such that it melts the material of the base of the brush head and the two components are thus joined. The wall may also be fixed by sonication or even by an adhesive to the brush head. In another embodiment it could be fixed to the brush head by mechanical means. For example, the wall, which would suitably comprise a thickened base, could be pushed through an aperture in the base of the brush head such that the thickened base remains below the bristle bearing surface of the brush head and cannot be pushed through the aperture with a reasonable amount of force.

The wall may also comprise surface formations to improve the polishing or cleaning capability of the brush. Typical abrasives include any abrasive commonly used in oral care such as the silicas or even chalk. Surface formations would be created during any injection moulding step and would typically be of a patterned appearance.

The toothbrush head of the present invention may also be replaceable so that a new brush can be regenerated by replacing just the head and not the whole brush, which would result in great quantities of plastics being disposed of on a regular basis.

The brush according to the invention provides an improved cleaning action and helps the user attain an improved degree of whiteness, which may otherwise only be obtained through specialist care. In particular, the brush according to the invention also provides a polishing benefit to the teeth again which ordinarily may only be obtained through specialist case, e.g. from a dental hygienist or from a specialised polishing device.

Embodiments of a toothbrush according to the invention will now be discussed further with reference to the following non-limiting figures.

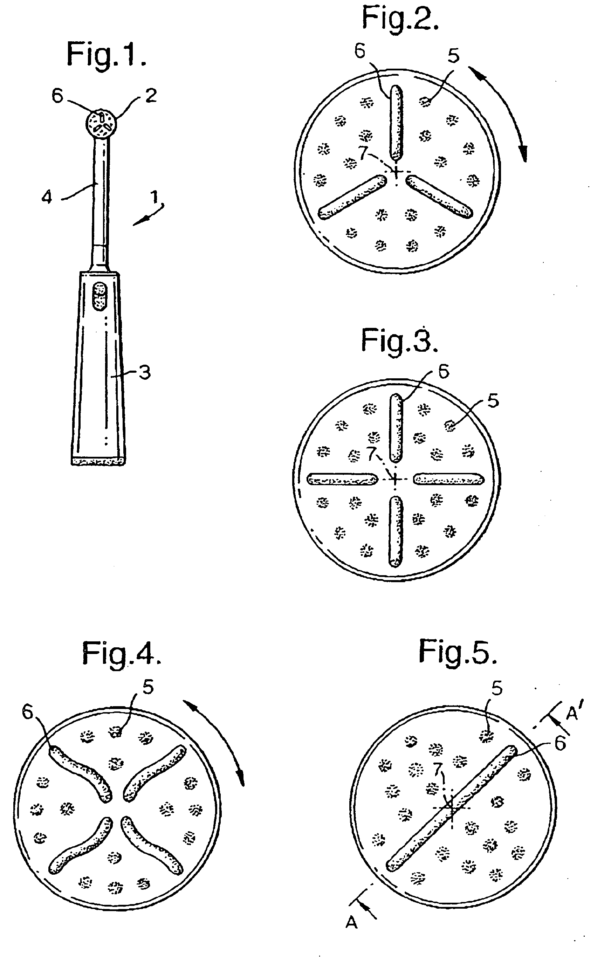

Figure 1 is an illustration of a brush according to the invention. Disclosed is a brush (1) comprising a brushing head (2) and a handle (3) which would typically house a motor and a power source. The head (2) is connected to the handle typically by way of a neck (4) which connects the motor to the head.

Figures 2 to 5 are different brush head designs. Figure 2 discloses a brush head (2) which oscillates about an oscillating axis (7), the head comprising three resilient walls (6) which extend on the brush head in a radial direction. The brush head also comprises tufts (5) of more conventional bristles.

Figure 3 discloses a brush head comprising four walls (6) again extending in a radial fashion from an oscillating axis (7) .

Figure 4 discloses a brush head comprising four walls (6) which each extend in a generally sinusoidal fashion and radially from an oscillating axis to the edges of the brush head.

Figure 5 discloses a brush head comprising a single wall (6) which extends from one side of the brush head to an opposite side through the oscillating axis (7).

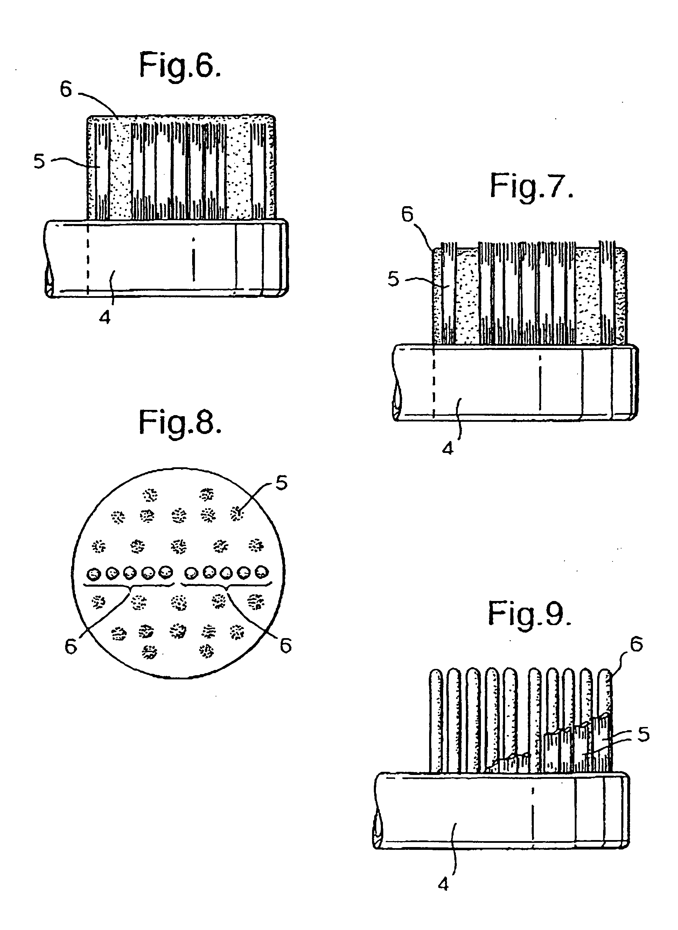

Figure 6 is an elevational view of a brush head according to the invention. Disclosed is a wall (6) which extends from a brushing surface further than bristle tufts (5). This design would provide an improved polishing capability and also a massaging perception by the consumer.

Figure 7 is also an elevational view of a brush head according to the invention. Disclosed are bristle tufts (5) which extend further from the bristle bearing surface than the wall (6).

Figure 8 is a plan view of a brush head according to the invention. Disclosed is an array of resilient fingers which are spaced relative to one another such that they present a wall according to the invention. Each finger is still capable of independent movement but the arrangement is such that the benefits of the invention can still be achieved. Figure 9 is an elevational view of the embodiment according to figure 8.

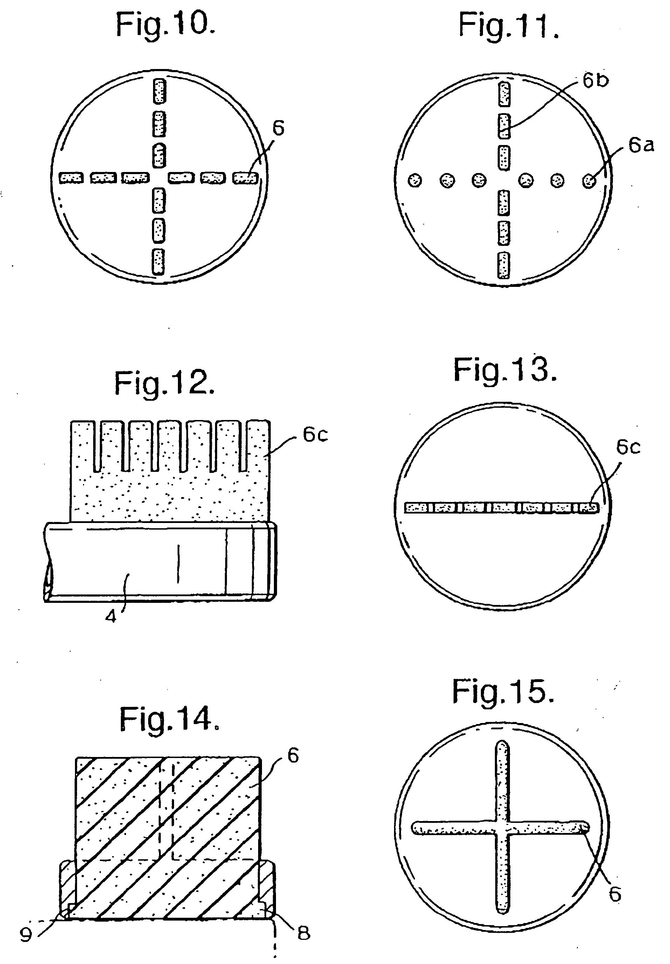

Figure 10 is a plan view of a brush head according to the invention. The wall (6) is in the form of separate smaller walls which are spaced so as to present a single structure. Such a wall may present a more gentle polishing to the teeth as would an arrangement according to figures 8 and 9.

Figure 11 is also a plan view of an embodiment according to the invention. In this example, the wall is in the form of shorter wall-like features (6b) and also rubbery fingers (6a) each arranged so as to present a single radially extending wall.

Figure 12 is an elevational view of an embodiment according to the invention. The wall is in the form of a single structure which extends from the bristle bearing surface of the brush head but is actually fimbriated to provide individually extending smaller walls (6c) Figure 13 is a plan view of the same embodiment.

Figure 14 is a cross sectional view of a brush head according to figure 5 along section A-A'. Shown is a wall-like member (6) and at its base a thickened portion (8) which functions as an anchor for the wall in the brush head. The thickened portion is accommodated in the brush head by way of a recess (9), which also provides for greater bonding to the wall since it also provides an increased surface area. The wall may be fixed by way of injection moulding or even sonication of and adhesive.

Figure 15 is an opposite plan view of an embodiment according to figure 3. Shown is the wall (6) which is unitarily moulded on its underside.

## Claims

1. An electric toothbrush comprising a handle and an oscillating brush head which oscillates about an oscillating axis, said head comprising a rubbery cleaning element, **characterised in that** the rubbery cleaning element is in the form of a radially-extending resilient wall.

2. Toothbrush according to claim 1, wherein the wall comprises an array of resilient massaging fingers which are capable of movement independent of one another but are arranged in a line such that they present a wall of massaging fingers.

3. Toothbrush according to claim 1 or 2, wherein the wall extends radially and in a straight line.

4. Toothbrush according to claim 1 or 2, wherein the wall extends radially and in a generally sinusoidal fashion.

5. Toothbrush according to any preceding claim, wherein the radially-extending resilient wall extends for a total distance of the wall of from 0.3 to 1.5 times the radius of the brush head.

6. Toothbrush according to any preceding claim, wherein the wall comprises an elastomeric material.

7. Toothbrush according to any preceding claim, wherein the wall is unitarily moulded.

8. Toothbrush according to any preceding claim, wherein the wall is tapered from a base end to a tip end.

9. Toothbrush according to any preceding claim, wherein the wall comprises surface formations.

10. Toothbrush according to any preceding claim, wherein the wall comprises an abrasive material.

11. Toothbrush according to any preceding claim, wherein the head is replaceable.

12. Replaceable toothbrush head according to claim 11.
